# EUROPEAN PATENT APPLICATION

(11) **EP 1 764 992 A1**
(43) Date of publication of application: **21.03.2007**
(21) Application number: 06254582.7
(22) Date of filing: 01.09.2006
(51) Int. Cl.: H04M 11/06

(54) **Network device for receiving ADSL and HPNA signals**

(30) Priority: 16.09.2005 CN 05264630 U
(71) Applicant: Hon Hai Precision Industry Co., Ltd., Tu-cheng City, Taipei Hsien, Taiwan (TW)
(72) Inventor: Chiang, Kuo-Wei, Tu-cheng City Taipei Hsien (TW)
(74) Representative: Stuttard, Garry Philip

(57) **Abstract**

A network device (10) includes a communication slot (100), a first signal processing circuit (300), a second signal processing circuit (400), and a central processing unit (200). The communication slot is used for receiving signals of different bands. The first signal processing circuit is connected to the communication slot, and is used for selecting a first band signal from the signals of different bands, and processing the first band signal thereby generating a processed first band signal. The second signal processing circuit is connected to the communication slot, and is used for selecting a second band signal from the signals of different bands, and processing the second band signal thereby generating a processed second band signal. The central processing unit is connected to the first and the second signal processing circuits, and is used for processing the processed first and second band signals.

## Description

### Background of the Invention

### 1. Field of the Invention

The invention relates to communication network devices, and particularly to a network device with a communication slot for receiving a plurality of signals of different bands.

### 2. Description of related art

Conventional network devices usually can only perform one function. However, with the development of communications technology, a demand for network devices having multiple functions has grown, and single function network devices do not suffice.

A network device having multiple functions must be able to simultaneously process many different signals corresponding to different functions. Generally, the network device needs many communication slots and transmitting cables. Because there are many communication slots and transmitting cables, users must carefully plug the transmitting cables into the correct corresponding communication slots without mistake. This may cause inconvenience to users. In addition, the need for many communication slots increases a size of the network device.

### SUMMARY OF THE INVENTION

One aspect of the present invention provides an exemplary network device for receiving a plurality of signals of different bands. The network device includes a communication slot, a first signal processing circuit, a second signal processing circuit, and a central processing unit. The communication slot is used for receiving the plurality of signals of different bands. The first signal processing circuit is connected to the communication slot, and is used for selecting a first band signal from the plurality of signals of different bands and processing the first band signal thereby generating a processed first band signal. The second signal processing circuit is connected to the communication slot, and is used for selecting a second band signal from the plurality of signals of different bands and processing the second band signal thereby generating a processed second band signal. The central processing unit is connected to the first and second signal processing circuits, and is used for processing the processed first and second band signals.

Another aspect of the present invention provides another exemplary network device for receiving a plurality of signals of different bands. The network device includes a communication slot, N signal processing circuits, and a central processing unit (CPU). The communication slot is used for receiving the plurality of signals of different bands. The N signal processing circuits are all connected to the communication slot, and are used for respectively selecting a total of N band signals from the plurality of signals of different bands, and respectively processing the N band signals thereby respectively generating a processed form of a total of N band signals. The CPU is connected to the N signal processing circuits, and is used for further processing the total of N processed band signals. N is a natural number.

Other advantages and novel features will become more apparent from the following detailed description when taken in conjunction with the accompanying drawings, in which:

### BRIEF DESCRIPTION OF THE DRAWINGS

FIG. 1 is a block diagram of a network device for receiving a plurality of signals of different bands of a first exemplary embodiment of the present invention;

FIG. 2 is a block diagram of a network device for receiving a plurality of signals of different bands of a second exemplary embodiment of the present invention;

FIG. 3 is a block diagram of a network device for receiving a plurality of signals of different bands of a third exemplary embodiment of the present invention;

FIG. 4 is a circuit diagram of an asymmetrical digital subscriber loop filter circuit of the network device of FIG. 3; and

FIG. 5 is a block diagram of a network device for receiving a plurality of signals of different bands of a fourth exemplary embodiment of the present invention.

### DETAILED DESCRIPTION OF THE INVENTION

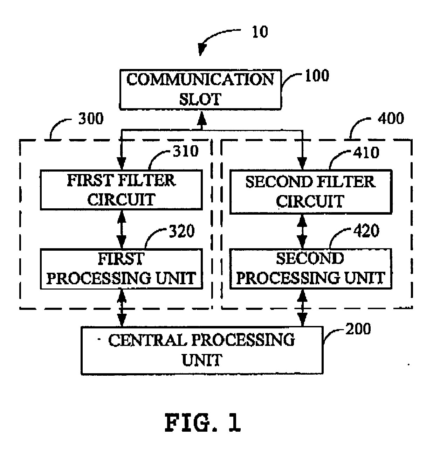

FIG. 1 is a block diagram of a network device 10 for receiving a plurality of signals of different bands of a first exemplary embodiment of the present invention. In the embodiment, the network device 10 includes a communication slot 100, a first signal processing circuit 300, a second signal processing circuit 400, and a central processing unit (CPU) 200. The communication slot 100 is used for receiving a plurality of signals of different bands. The first signal processing circuit 300 is connected to the communication slot 100, and is provided for selecting first band signals from the plurality of signals of different bands, and for processing the first band signals thereby generating processed first band signals. The second signal processing circuit 400 is also connected to the communication slot 100, and is provided for selecting second band signals from the plurality of signals of different bands, and for processing the second band signals thereby generating processed second band signals. The CPU 200 is connected to the first signal processing circuit 300 and the second signal processing circuit 400, and is used for processing the processed band signals. In the exemplary embodiment, the first and second band signals are analog signals, and the processed first and second band signals are digital signals. In the exemplary embodiment, impedance matching of the first signal processing circuit 300 and the second signal processing circuit 400 is the same.

The first signal processing circuit 300 includes a first filter circuit 310 and a first processing unit 320. The first filter circuit 310 is connected to the communication slot 100, and is provided for selecting the first band signals from the plurality of signals of different bands. The first processing unit 320 is disposed between the first filter circuit 310 and the CPU 200, and is used for processing the first band signals thereby generating the processed first band signals.

The second signal processing circuit 400 includes a second filter circuit 410 and a second processing unit 420. The second filter circuit 410 is connected to the communication slot 100, and is provided for selecting the second band signals from the plurality of signals of different bands. The second processing unit 420 is disposed between the second filter circuit 410 and the CPU 200, and is used for processing the second band signals thereby generating the processed second band signals.

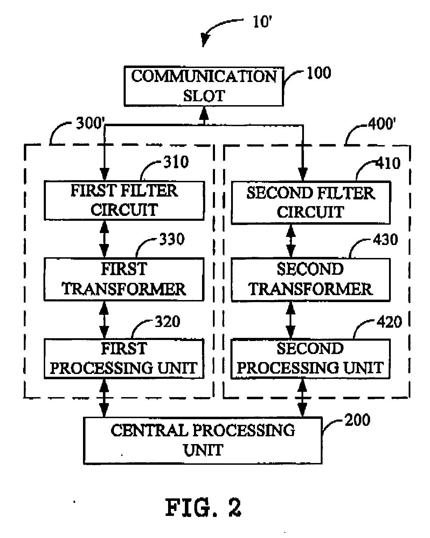

FIG. 2 is a block diagram of a network device 10' for receiving a plurality of signals of different bands of a second exemplary embodiment of the present invention. In this embodiment, a first signal processing circuit 300' and a second signal processing circuit 400' respectively include a first transformer 330 and a second transformer 430, and other parts of the network device 10' of FIG. 2 are the same as those of the network device 10 of FIG. 1. The first transformer 330 is connected between the first filter circuit 310 and the first processing unit 320, and is used for transforming voltage levels of the first band signals. The second transformer 430 is connected between the second filter circuit 410 and the second processing unit 420, and is used for transforming voltage levels of the second band signals. In the exemplary embodiment, the first transformer 330 is used for raising voltage levels of the first band signals, and the second transformer 430 is used for raising voltage levels of the second band signals.

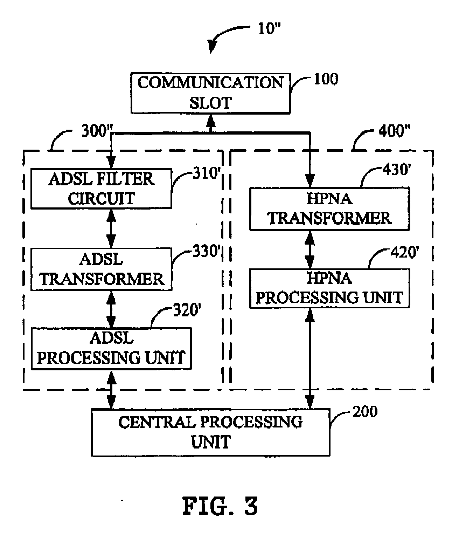

FIG. 3 is a block diagram of a network device 10" for receiving a plurality of signals of different bands of a third exemplary embodiment of the present invention. In this embodiment, the network device 10" includes the communication slot 100, a first signal processing circuit 300", a second signal processing circuit 400", and the CPU 200. Connections and functions of the network device 10" are the same as those of FIGS. 1 and 2. In this embodiment, the first band signal is an asymmetrical digital subscriber loop (ADSL) signal, and the second band signal is a home phoneline networking alliance (HPNA) signal.

The first signal processing circuit 300" includes an ADSL filter circuit 310', an ADSL transformer 330', and an ADSL processing unit 320'. The ADSL filter circuit 310' is connected to the communication slot 100, and is used for selecting the ADSL signals from the plurality of signals of different bands. The ADSL transformer 330' is connected between the ADSL filter circuit 310' and the ADSL processing unit 320', and is used for transforming voltage levels of the ADSL signals. The ADSL processing unit 320' is connected to the ADSL transformer 330' and the CPU 200, and is used for processing the ADSL signals thereby generating processed ADSL signals.

The second signal processing circuit 400" includes an HPNA transformer 430' and an HPNA processing unit 420'. The HPNA transformer 430' is connected to the communication slot 100, and is used for selecting the HPNA signals from the plurality of signals of different bands, and for transforming voltage levels of the HPNA signals. In this embodiment, the HPNA transformer 430' has a function of filtering, so the second signal processing circuit 400" does not include a separate filter circuit. The HPNA processing unit 420' is connected to the HPNA transformer 430' and the CPU 200, and is used for processing the HPNA signals thereby generating processed HPNA signals.

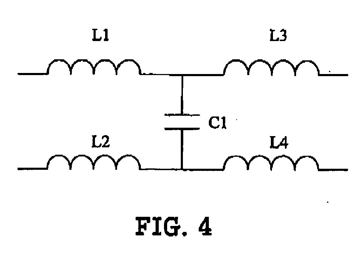

FIG. 4 is a circuit diagram of the ADSL filter circuit 310'. In the exemplary embodiment, the ADSL filter circuit 310' includes four inductors L1, L2, L3, and L4, and a capacitor C1. The inductor L1 is the same as the inductor L2, and the inductor L3 is the same as the inductor L4. The inductors L1 and L2 are both connected to the communication slot 100. The inductors L3 and L4 are respectively connected to the inductors L1 and L2, and are both connected to the ADSL transformer 330'. The capacitor C1 has one end thereof connected to the inductor L1 and the inductor L3, and the other end thereof connected to the inductor L2 and the inductor L4.

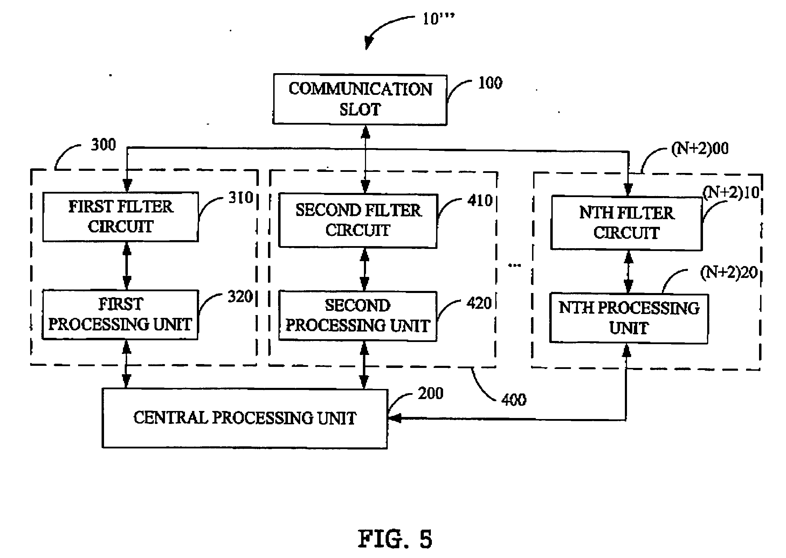

FIG. 5 is a block diagram of a network device 10*'''* for receiving a plurality of signals of different bands of a fourth exemplary embodiment of the present Invention. In this embodiment, the network device 10"' includes the communication slot 100, N signal processing circuits 300, 400, ...(N+2)00, and the CPU 200. N is a natural number. The communication slot 100 is used for receiving a plurality of signals of different bands. The N signal processing circuits 300, 400, ...(N+2)00 are all connected to the communication slot 100, and are respectively used for respectively selecting a total of N band signals from the plurality of signals of different bands, and for respectively processing the N band signals thereby respectively generating a processed form of a total of N band signals. In the exemplary embodiment, the band signals are analog signals, and the processed band signals are digital signals. The CPU 200 is connected to the N signal processing circuits 300, 400, ... (N+2)00, and is used for further processing the total of N processed band signals generated by the N signal processing circuits 300, 400, ...(N+2)00. The first signal processing circuit 300 includes a first filter circuit 310 and a first processing unit 320, the second signal processing circuit 400 includes a second filter circuit 410 and a second processing unit 420, and so on through to the Nth signal processing circuit (N+2)00 includes an Nth filter circuit (N+2)10 and an Nth processing unit (N+2)20. Each of the filter circuits 310, 410, ...(N+2)10 is used for selecting a corresponding band signal from the plurality of signals of different bands. Each of the processing units 320, 420, ...(N+2)20 is connected to a corresponding filter circuit 310, 410, ...(N+2)10, and is used for processing the corresponding band signal to generate the corresponding processed band signal. In the exemplary embodiment, impedance matching of the N signal processing circuits 300, 400, ...(N+2)00 is the same.

The network devices 10, 10', 10", and 10"' can receive a plurality of signals with only the one communication slot 100. Therefore, the network devices 10, 10', 10", and 10"' are convenient for users, and can help avoid operating mistakes.

While various embodiments have been described above, it should be understood that they have been presented by way of example only and not by way of limitation. Thus the breadth and scope of the present Invention should not be limited by the above-described exemplary embodiments, but should be defined only in accordance with the following claims and their equivalents.

## Claims

1. A network device for receiving a plurality of signals of different bands, comprising:
a communication slot for receiving the plurality of signals of different bands;
a first signal processing circuit connected to the communication slot, for selecting a first band signal from the plurality of signals of different bands, and processing the first band signal thereby generating a processed first band signal;
a second signal processing circuit connected to the communication slot, for selecting a second band signal from the plurality of signals of different bands, and processing the second band signal thereby generating a processed second band signal; and
a central processing unit connected to the first signal processing circuit and the second signal processing circuit, for processing the processed first band signal and the processed second band signal.

2. The network device as claimed in claim 1, wherein the first band signal is an asymmetrical digital subscriber loop signal.

3. The network device as claimed in claim 2, wherein the first signal processing circuit comprises:
a first filter circuit connected to the communication slot, for selecting the first band signal from the plurality of signals of different bands; and
a first processing unit connected to the first filter circuit, for processing the first band signal thereby generating the processed first band signal.

4. The network device as claimed in claim 3, wherein the first signal processing circuit further comprises a first transformer connected between the first filter circuit and the first processing unit.

5. The network device as claimed in claim 3, wherein the first filter circuit comprises:
a first inductor connected to the communication slot;
a second inductor the same as the first inductor, connected to the communication slot;
a third inductor connected between the first inductor and the first processing unit;
a fourth inductor the same as the third inductor, connected between the second inductor and the first processing unit; and
a capacitor having one end connected to the first inductor and the second inductor, and another end connected to the third inductor and the fourth inductor.

6. The network device as claimed in claim 1, wherein the second band signal is a home phoneline networking alliance signal.

7. The network device as claimed in claim 6, wherein the second signal processing circuit comprises;
a second transformer connected to the communication slot, for selecting the second band signal from the plurality of signals of different bands; and
a second processing unit connected to the second transformer, for processing the second band signal thereby generating the processed second band signal.

8. The network device as claimed in claim 1, wherein the first and second band signals are analog signals.

9. The network device as claimed in claim 9, wherein the processed first and second band signals are digital signals.

10. A network device for receiving a plurality of signals of different bands, comprising:
a communication slot for receiving the plurality of signals of different bands;
N signal processing circuits all connected to the communication slot, for respectively selecting a total of N band signals from the plurality of signals of different bands, and respectively processing the N band signals thereby respectively generating a processed form of a total of N band signals; and
a central processing unit connected to the N signal processing circuits, for further processing the total of N processed band signals;
wherein N is a natural number.

11. The network device as claimed in claim 10, wherein each of the signal processing circuits comprises:
a filter circuit connected to the communication slot, for selecting a corresponding band signal from the plurality of signals of different bands; and
a processing unit connected to the filter circuit, for processing the corresponding band signal thereby generating the corresponding processed band signal.

12. The network device as claimed in claim 10, wherein the band signals are analog signals.

13. The network device as claimed in claim 12, wherein the further processed band signals are digital signals.
